# EUROPÄISCHE PATENTSCHRIFT

(11) **EP 1 400 764 B1**
(45) Veröffentlichungstag und Bekanntmachung des Hinweises auf die Patenterteilung: **31.05.2006**
(21) Anmeldenummer: 02020946.6
(22) Anmeldetag: 19.09.2002
(51) Int. Cl.: F24J 2/00, B60H 1/00, B60R 15/00

(54) **Warmwasserbereitungsanlage**
Hot-water preparation system
Installation de préparation d'eau chaude

(43) Veröffentlichungstag der Anmeldung: 24.03.2004
(73) Patentinhaber: Kröter, Franz Adolf, 56072 Koblenz (DE); Steiner, Roland, 65551 Limburg (DE)
(72) Erfinder: Kröter, Franz Adolf, 56072 Koblenz (DE); Steiner, Roland, 65551 Limburg (DE)
(74) Vertreter: Hauck, Graalfs, Wehnert, Döring, Siemons

(56) Entgegenhaltungen:
- DE-A- 4 440 028
- DE-U- 9 201 907
- US-A- 3 973 553
- US-A- 4 680 941

## Beschreibung

Die vorliegende Erfindung betrifft eine Anlage zur Warmwasserbereitung in Land- und Wasserfahrzeugen, wie Wohnmobilen, Wohnwagen, Booten u. dgl.. nach dem Oberbegriff des Anspruchs 1.

Normalerweise wird die Warmwasserbereitung in Wohnmobilen oder Wohnwagen mittels Gas durchgeführt. Dies ist jedoch umständlich, da hierbei Gasflaschen mitgeführt und bereitgehalten werden müssen. Eine elektrisch durchgeführte Warmwasserbereitung benötigt entweder einen Netzanschluß oder geeignete netzunabhängige Stromquellen. Im erstgenannten Fall ist die Warmwasserbereitung auf diejenigen Bereiche beschränkt, bei denen ein Netzanschluß zur Verfügung steht, und im letztgenannten Fall bei der Verwendung von Batterien, Akkumulatoren, Generatoren etc. sind die Kapazitäten begrenzt, müssen Aufladephasen eingehalten werden oder muß eine aufwendige Stromerzeugung über Dieselaggregate etc. durchgeführt werden. Darüber hinaus sind diese Methoden nicht immer umweltfreundlich.

Es ist ferner bekannt, die Warmwasserbereitung mittels Solarenergie durchzuführen. Hierbei finden Solarkollektoren Verwendung, die auf dem Dach des Wohnmobils, Wohnwagens etc. angeordnet sind. Da mit derartigen Solarkollektoren mangels Sonnenbestrahlung in der Nacht oder bei schlechtem Wetter keine Warmwasserbereitung rund um die Uhr durchgeführt werden kann, werden diese Anlagen nur zusätzlich zu einer herkömmlichen Warmwasserbereitung durch Gas oder elektrischen Strom eingesetzt. Es müssen daher auch hier die vorstehend beschriebenen aufwendigen Maßnahmen getroffen werden, beispielsweise die Mitführung von Gasflaschen

Derartige Anlagen sind grandsätzlich bekannt - z.B. aus US3973553A-.

Der vorliegenden Erfindung liegt die Aufgabe zugrunde, eine Anlage zur Warmwasserbereitung in Land- und Wasserfahrzeugen, wie Wohnmobilen, Wohnwagen, Booten u. dgl., zu schaffen, die weitgehend gas- und stromfrei betrieben werden kann.

Diese Aufgabe wird erfindungsgemäß durch eine Anlage der angegebenen Art mit den folgenden Merkmalen gelöst:
Einem Warmwasserboiler mit einem Innenraum zur Aufnahme des zu erwärmenden Wassers und einem diesen zumindest teilweisen umgebenden, von Heizwasser durchströmten Außenraum,
einem von Heizwasser durchströmten, an den Außenraum des Warmwasserboilers angeschlossenen Sekundärheizkreis,
einem einen Teil des Sekundärheizkreises bildenden ersten Wärmetauscher, der mit der Abwärme eines Kühlschrankes beaufschlagt wird,
einem einen Teil des Sekundärheizkreises bildenden zweiten Wärmetauscher, der mit der Abwärme des Antriebsmotors des Fahrzeuges beaufschlagt wird,
einem einen Solarkollektor aufweisenden Primärheizkreis, der von Heizwasser durchströmt wird; und
einem einen Teil des Primärheizkreises und Sekundärheizkreises bildenden dritten Wärmetauscher zur Übertragung der Wärmeenergie des Primärheizkreises auf den Sekundärheizkreis.

Die erfindungsgemäße Lösung besteht in dem Gedanken, zur Warmwasserbereitung der entsprechenden Fahrzeuge drei Wärmequellen heranzuziehen, nämlich die Abwärme eines Kühlschrankes des Fahrzeuges, die Abwärme des Antriebmotors des Fahrzeuges und die durch einen Solarkollektor erzeugte Wärme. Die Kombination dieser drei Wärmequellen sichert eine weitgehende Unabhängigkeit von herkömmlichen Energiequellen, wie Gas oder Elektrizität, so daß die vorstehend aufgezeigten Nachteile nicht in Kauf genommen werden müssen. Da der Kühlschrank des Fahrzeuges permanent in Betrieb ist, kann die Anlage rund um die Uhr in Betrieb sein, insbesondere auch nachts, so daß die Zeiten, in denen der Solarkollektor keine Wärme liefert, auf einfache Weise überbrückt werden können. Desweiteren wird die Abwärme des Antriebsmotors des Fahrzeuges genutzt, so daß zusätzlich eine weitere Wärmequelle zu Verfügung steht, die ebenfalls die Zeiten überbrücken kann, in denen der Solarkollektor keine Wärmeenergie liefert.

Durch Nutzung der drei vorstehend beschriebenen Wärmequellen, die in der erfindungsgemäß ausgebildeten Anlage gleichzeitig oder wahlweise in Betrieb sein können, wird eine umweltfreundlich arbeitende Warmwasserbereitung erreicht, bei der nahezu keine Betriebskosten auftreten, da der Kühlschrank ohnehin in Betrieb ist und der Antriebsmotor des Fahrzeuges ohnehin läuft. Der Solarkollektor verursacht keine laufenden Betriebskosten.

Durch geschickte Nutzung und Koppelung von den drei vorstehend erwähnten Wärmequellen ergibt sich somit eine Anlage zur Warmwasserbereitung, die wenig Raum benötigt, nahezu kostenfrei betrieben werden kann, umweltschonend arbeitet und nicht auf herkömmliche Energieträger zurückgreift.

Die Anlage besitzt einen Warmwasserboiler, dessen Innenraum zur Aufnahme des zu erwärmenden Wassers dient. Ferner hat der Warmwasserboiler einen den Innenraum zumindest teilweise umgebenden Außenraum, der über einen Mantel vom Innenraum getrennt ist. Dieser Außenraum wird vom Heizwasser durchströmt, und der Innenraum und Außenraum trennende Mantel ist vorzugsweise aus einem Material mit guten Wärmeleiteigenschaften hergestellt. Der Innenraum ist mit einem Zu- und Ablauf für das zu erwärmende Wasser versehen, das beispielsweise aus einem geeigneten Wassertank zugeführt werden kann.

Der Außenraum des Warmwasserboilers bildet einen Teil eines vom Heizwassers durchströmten Sekundärkreises. Dieser Sekundärkreis umfaßt drei Wärmetauscher, wobei der erste Wärmetauscher mit der Abwärme eines Kühlschranks beaufschlagt wird, der zweite Wärmetauscher mit der Abwärme des Antriebsmotors des Fahrzeug beaufschlagt wird und der dritte Wärmetauscher den Sekundärheizkreis mit einem Primärheizkreis verknüpft, der mindestens einen Solarkollektor enthält. Es versteht sich, daß im Sekundärheizkreis desweiteren die üblichen Ventile, Fördereinrichtungen (Pumpen) und Meßeinrichtungen (Durchfluß- und Temperaturmeßeinrichtungen) angeordnet sind, die dem Fachmann bekannt sind und an dieser Stelle im einzelnen nicht aufgeführt werden müssen.

Wenn hier davon die Rede ist, daß der zweite Wärmetauscher mit der Abwärme des Antriebsmotors des Fahrzeuges beaufschlagt wird, so soll dies eine Beaufschlagung mit der unmittelbaren Motorabwärme, beispielsweise über einen Ventilator, eine Beaufschlagung mit dem erwärmten Motorkühlwasser, eine Beaufschlagung mit den heißen Abgasen des Motors etc. umfassen. Die Erfindung umfaßt jedenfalls sämtliche Möglichkeiten zur Nutzung der durch den Betrieb des Motors, normalerweise eines Verbrennungsmotors, erzeugten Wärme.

In entsprechender Weise bedeutet die Formulierung "erster Wärmetauscher, der mit der Abwärme eines Kühlschrankes beaufschlagt wird", jegliche Nutzung der während des Betriebs des Kühlschrankes entstehenden Wärmeenergie.

Die Ausbildung der Wärmetauscher für beide Fälle ist an den jeweiligen Einsatzzweck anzupassen und dem Fachmann bekannt, so daß es keiner Erläuterung von Details bedarf.

Über den dritten Wärmetauscher (Flüssigkeit/Flüssigkeit-Wärmetauscher) ist der Sekundärheizkreis mit einem Primärheizkreis gekoppelt. Mit der erfindungsgemäß vorgenommenen Trennung des Heizkreises in einen Primärheizkreis und einen Sekundärheizkreis, wobei der Sekundärheizkreis den Energieverbraucher beaufschlagt, wird ein Ausgleich der im Primärheizkreis auftretenden Wärmeverluste erreicht. Ferner wird hierdurch das Heizmedium im Primärheizkreis vom Energieverbraucher abgekoppelt, der nur über das Heizmedium im Sekundärheizkreis beaufschlagt wird. Diese Entkoppelung hat den Vorteil, daß der Primärheizkreis auf die speziellen Bedingungen und Parameter des Solarkollektors abgestimmt werden kann. So kann das Heizmedium (Wasser) des Primärheizkreises zusätzlich mit einem Frostschutzmittel versehen sein, um ein Einfrieren des Wassers in den Röhren des Kollektors zu vermeiden.

Normalerweise sind die Heizmedien im Primärheizkreis und Sekundärheizkreis Wasser, wobei, wie erwähnt, das Heizmedium des Primärheizkreises vorzugsweise mit einem Frostschutzmittel versehen ist. Die Verwendung von anderen Flüssigkeiten, insbesondere auch getrennten Flüssigkeiten in beiden Kreisen, wird jedoch erfindungsgemäß nicht ausgeschlossen.

Wahlweise kann die erfindungsgemäß ausgebildete Anlage einen Gasbrenner zur Erhitzung des im Warmwasserboiler befindlichen Wassers aufweisen, der vorzugsweise mit Direktbefeuerung arbeitet und ein- und ausfahrbar ausgebildet ist. Hierbei handelt es sich um eine Zusatzeinrichtung.

Normalerweise strebt die Erfindung jedoch einen gas- und stromlosen Betrieb der Anlage an.

Die erfindungsgemäß ausgebildete Anlage zur Warmwasserbereitung kann auch zu Raumheizzwecken eingesetzt werden. Hierzu weist sie vorzugsweise einen einen Teil des Sekundärheizkreises bildenden Radiator als Raumheizeinrichtung auf. Natürlich können auch mehrere Radiatoren vorgesehen sein.

Wenn die Anlage zum Kühlen der Raumluft verwendet werden soll, besitzt sie vorzugsweise einen einen Teil des Sekundärheizkreises bildenden vierten Wärmetauscher zum Kühlen unter Verwendung eines Kältekreises.

Was den Solarkollektor anbetrifft, so können ein oder mehrere Solarkollektoren vorgesehen sein, wobei jedoch vorzugsweise aus Gründen der Raumersparnis ein einziger Solarkollektor Verwendung findet, der als Hochleistungskollektor ausgebildet ist. Bei einem solchen Hochleistungskollektor handelt es sich vorzugsweise um einen plattenförmigen Kollektor, in dem eine Reihe von parallel zueinander angeordnete Rohre angeordnet ist, die vom Heizmedium des Primärheizkreises durchströmt werden. Zweckmäßigerweise enthält der Plattenkollektor 10-14, insbesondere 12, parallel zueinander angeordnete Rohren, die vom Heizmedium des Primärheizkreises durchströmt werden. Diese Rohre sind vorzugsweise als sogenannte Brillenrohre ausgebildet, d.h. Rohre, die im Querschnitt die Form einer Brille besitzen. Derartige Rohre besitzen eine besonders große Oberfläche für die Wärmeübertragung und erzeugen in ihrem Inneren durch ihre Form Turbulenzen, die für eine besonders intensive Wärmeübertragung erwünscht sind, da auf diese Weise das Heizmedium länger in den Rohren verweilt als im Falle einer reinen laminaren Strömung.

Wesentlich ist für die erfindungsgemäße Anlage, daß ein Solarkollektor Verwendung findet, der bei einem möglichst geringen Flächenbedarf eine besonders gute Energieausnutzung ermöglicht und somit einen besonders hohen Gesamtwirkungsgrad besitzt. Diese Kriterien werden durch einen Kollektor in Leichtbauweise, der über Steckverbindungen rasch und einfach montierbar ist, verwirklicht, der beispielsweise eine Größe von 120 x 70cm mit 12 parallel zueinander angeordneten Brillenrohren üblicher Beschichtung besitzt, wobei ein Volumenstrom durch die Rohre von 20 - 100 l/h vorgesehen ist.

Zur Steuerung bzw. Regelung der erfindungsgemäß ausgebildeten Anlage finden übliche Einrichtungen Verwendung. So ist vorzugsweise am Solarkollektor ein Temperaturfühler vorgesehen, der eine entsprechende Meßgröße an eine Steuereinrichtung liefert, die in Abhängigkeit von dieser Temperatur eine Umwälzpumpe im Primärheizkreis und/oder Sekundärheizkreis steuert. Ferner sind geeignete Durchflußmesser vorgesehen, die ebenfalls Meßgrößen an die Steuereinrichtung liefern können, um hierdurch eine Systemsteuerung bzw. Systemregelung vorzunehmen. Solche Einrichtungen sind dem Fachmann bekannt und werden an dieser Stelle nicht im einzelnen aufgeführt. Das gleich trifft für geeignete Dosier- und/oder Absperrventile, Ausdehnungsgefäße, Entleerungseinrichtungen etc. zu.

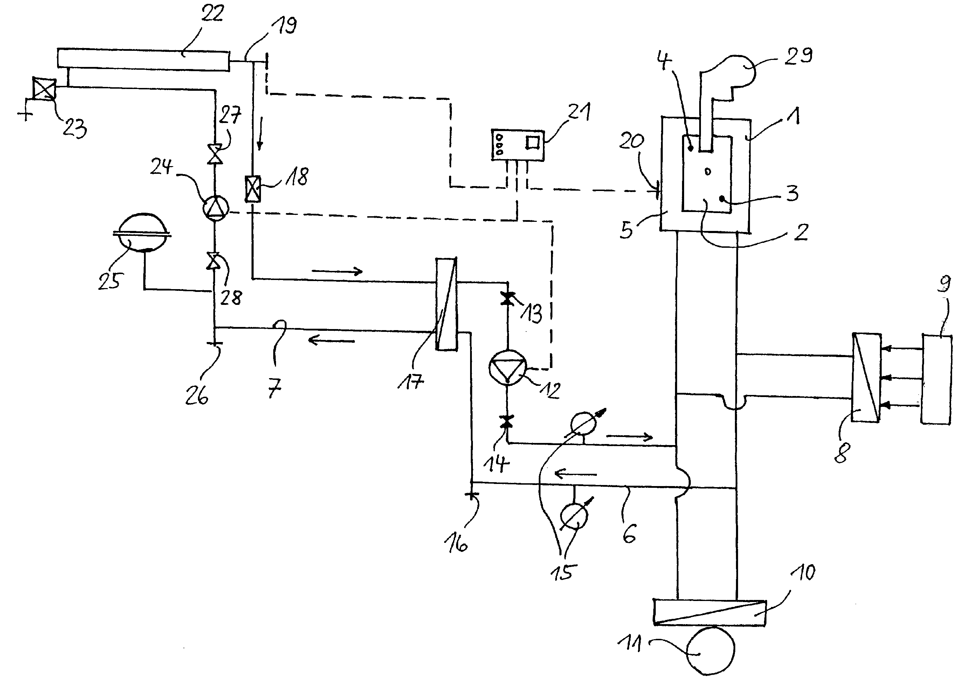

Die Erfindung wird nachfolgend anhand eines Ausführungsbeispieles in Verbindung mit der einzigen Zeichnung im einzelnen erläutert. Die einzige Zeichnung zeigt schematisch den Aufbau einer Ausführungsform der erfindungsgemäß ausgebildeten Anlage zur Warmwasserbereitung in einem Wohnmobil.

Die in der Figur dargestellte Anlage zur Warmwasserbereitung in einem Wohnmobil umfaßt einen Warmwasserboiler 1 mit einem Innenraum 2 zur Aufnahme des zu erwärmenden Wassers und einem diesen umgebenden, von Heizwasser durchströmten Außenraum 5, der vom Innenraum 2 und der Umgebung durch entsprechende Mäntel getrennt ist, wobei der Innenmantel zur Wärmeübertragung dient und aus einem Material mit gutem Wärmeleitvermögen besteht. Der Innenraum 2 des Boilers weist einen Kaltwasserzulauf 3 und einen Warmwasserablauf 4 auf. Über den Kaltwasserzulauf 3 wird der Boiler mit Wasser versorgt, das beispielsweise aus einem geeigneten Wassertank stammen kann.

Der Außenraum 5 des Warmwasserboilers 1 steht mit einem Sekundärheizkreis 6 in Verbindung, welcher an einen ersten Wärmetauscher 8, einen zweiten Wärmetauscher 10 und einen dritten Wärmetauscher 17 angeschlossen ist. Der erste Wärmetauscher 8 wird mit der von einem Kühlschrank 9 des Wohnmobils, der normalerweise über 24 Stunden in Betrieb ist, erzeugten Abwärme beaufschlagt, so daß das im Sekundärheizkreis umgewälzte Heizmedium (Wasser) entsprechend erhitzt wird. Der zweite Wärmetauscher 10 wird über einen Ventilator 1 mit der Abwärme des Antriebsmotors des Wohnmobils beaufschlagt, so daß auch hierdurch das den Wärmetauscher 10 durchströmende Heizmedium eine Temperatursteigerung erfährt. Über den erwähnten dritten Wärmetauscher 17 ist der Sekundärheizkreis mit einem Primärheizkreis 7 gekoppelt, der später erläutert wird.

Bei dem Sekundärheizkreis 6 kann es sich um ein übliches Rohrsystem handeln, das einen bei 16 gezeigten Entleerungsstutzen besitzt. Im Rohrsystem sind Absperr- bzw. Dosierventile 13 und 14 und Temperaturmesser 15 angeordnet. Eine Umwälzpumpe 12 wälzt das Heizmedium im Sekundärkreis um.

Der Primärheizkreis 7, der mit dem Sekundärheizkreis 6 über den Wärmetauscher 17 in Verbindung steht, umfaßt ebenfalls ein übliches Rohrsystem, in das ein Solarkollektor 22 geschaltet ist. Als Heizmedium im Primärheizkreis 7 dient ebenfalls Wasser, das mit einem geeigneten Frostschutzmittel versehen ist. Der Inhalt des Primärkreises 7 beträgt etwa 2,5 l.

Der Solarkollektor 22 ist plattenförmig ausgebildet und kann beispielsweise auf dem Dach des Wohnmobils angeordnet sein. Er umfaßt zwölf parallel zueinander angeordnete Brillenrohre, die an den Primärheizkreis 7 angeschlossen sind und vom Heizmedium durchströmt werden. Durch die vom Solarkollektor 22 eingefangene Sonnenenergie wird das die Kollektorrohre durchströmende Heizmedium erhitzt und überträgt die Wärme über den Wärmetauscher 17 auf das im Sekundärheizkreis 6 strömende Heizmedium, über das schließlich das zu erwärmende Wasser im Warmwasserboiler 1 erhitzt wird.

Bei dem Solarkollektor 22 handelt es sich um einen Hochleistungskollektor der im allgemeinen Beschreibungsteil erwähnten Art. Am Kollektor ist ein Fühler 19 angebracht, der die Temperatur des den Kollektor verlassenden Heizmediums erfühlt und ein entsprechendes Signal an eine Steuer/Regeleinrichtung 21 abgibt, die von einem weiteren Temperaturfühler 20, der am Warmwasserboiler angebracht ist, mit einem weiteren Temperatursignal versorgt wird. In Abhängigkeit von den ertasteten Temperaturen steuert bzw. regelt die Einrichtung 21 eine Umwälzpumpe 24 im Primärheizkreis 7 sowie die erwähnte Umwälzpumpe 12 im Sekundärheizkreis 6. Ferner ist im Primärheizkreis 7 ein Durchflußmesser 18 vorgesehen, der ebenfalls einen Meßwert an die Steuer/Regeleinrichtung liefert (nicht gezeigt). Schließlich ist der Solarkollektor 22 mit einer Entleerungseinrichtung 23 und der Primärheizkreis 7 mit einer Entleerungseinrichtung 26 sowie entsprechenden Absperr/Dosierventilen 27,28 versehen.

### Die Anlage funktioniert folgendermaßen:

Wenn der Kühlschrank 9 des Wohnmobils sowie dessen Antriebsmotor in Betrieb sind, wird das den Sekundärheizkreis 6 durchströmende Wasser bei eingeschalteter Umwälzpumpe 12 erhitzt. Darüber hinaus wird das den Sekundärheizkreis 6 durchströmende Wasser über den Wärmetauscher 17 erhitzt, wenn der Solarkollektor 22 Solarenergie empfängt und das im Primärheizkreis 7 befindliche Wasser durch den Wärmetauscher 17 umgewälzt wird. Die drei Wärmequellen (Wärmetauscher 8, Wärmetauscher 10 und Wärmetauscher 17) können je nach Bedarf zu- oder abgeschaltet werden (nicht gezeigt), um eine gewünschte, optimierte Temperatur zu erreichen. Normalerweise sind alle Wärmetauscher an das System gekoppelt, und bei Erreichen einer gewünschten Boilertemperatur, die über den Fühler 20 erfaßt wird, werden die Umwälzpumpen 12 und 18 entsprechend angesteuert (ausgeschaltet oder zurückgeschaltet). Bei Temperaturabfall am Boiler werden die Pumpen zugeschaltet bzw. wird deren Förderleistung erhöht.

Abschließend sei noch erwähnt, daß der Primärheizkreis 7 mit einem geeigneten Ausdehnungsgefäß 25 versehen ist. Ferner ist ein Gasbrenner 29 mit Direktbefeuerung für den Warmwasserboiler angeordnet, der für Notfälle zum Einsatz kommen kann.

## Patentansprüche

1. Anlage zur Warmwasserbereitung in Land- und Wasserfahrzeugen, wie Wohnmobilen, Wohnwagen, Booten u. dgl., mit
einem Warmwasserboiler (1) mit einem Innenraum (2) zur Aufnahme des zu erwärmenden Wassers **gekennzeichnet durch** einen Innenraum, einen diesen zumindest teilweise umgebenden, von Heizwasser durchströmten Außenraum (5),
einen von Heizwasser durchströmten, an den Außenraum (5) des Warmwasserboilers (1) angeschlossenen Sekundärheizkreis (6),
einem einen Teil des Sekundärheizkreises (6) bildenden ersten Wärmetauscher (8), der mit der Abwärme eines Kühlschrankes (9) beaufschlagt wird,
einem einen Teil des Sekundärheizkreises (6) bildenden zweiten Wärmetauscher (10), der mit der Abwärme des Antriebsmotors des Fahrzeuges beaufschlagt wird,
einem einen Solarkollektor (22) aufweisenden Primärheizkreis (7), der von Heizwasser durchströmt wird, und
einem einen Teil des Primärheizkreises (7) und Sekundärheizkreises (6) bildenden dritten Wärmetauscher (17) zur Übertragung der Wärmeenergie des Primärheizkreises (7) auf den Sekundärheizkreis (6).

2. Anlage nach Anspruch 1, **dadurch gekennzeichnet, daß** sie ferner einen Gasbrenner (29) zur Erhitzung des im Warmwasserboiler (1) befindlichen Wassers aufweist.

3. Anlage nach Anspruch 1 oder 2, **dadurch gekennzeichnet, daß** sie einen einen Teil des Sekundärheizkreises (6) bildenden Radiator als Raumheizeinrichtung besitzt.

4. Anlage nach einem der Ansprüche 1 bis 3, **dadurch gekennzeichnet, daß** sie einen einen Teil des Sekundärheizkreises (6) bildenden vierten Wärmetauscher zum Kühlen unter Verwendung eines Kältekreises aufweist.

5. Anlage nach einem der vorangehenden Ansprüche, **dadurch gekennzeichnet, daß** der Solarkollektor (22) als plattenförmiger Kollektor ausgebildet ist.

6. Anlage nach Anspruch 5, **dadurch gekennzeichnet, daß** der plattenförmige Kollektor eine an den Primärkreis (7) angeschlossene Reihe von 10 - 14, insbesondere 12, parallel zueinander angeordneten Rohren aufweist.

7. Anlage nach einem der vorangehenden Ansprüche, **dadurch gekennzeichnet, daß** die Rohre des Solarkollektors (22) als Brillenrohre ausgebildet sind.

8. Anlage nach einem der vorangehenden Ansprüche, **dadurch gekennzeichnet, daß** der Primärheizkreis (7) ein Frostschutzmittel enthält.

## Claims

1. A hot-water preparation system in land and water vehicles, as for instance mobile homes, caravans, boats etc., comprising a hot-water boiler (1) with an inner space (2) for taking up the water to be heated,
**characterized by**
an inner space, an outer space (5) at least partly surrounding the same and flown through by heating water,
a secondary heating circuit (6) flown through by heating water and connected to the outer space (5) of the hot-water boiler (1),
a first heat exchanger (8) forming a part of the secondary heating circuit (6) and applied by the waste heat of a refrigerator (9),
a second heat exchanger (10) forming a part of the secondary heating circuit (6) and applied by the waste heat of the drive motor of the vehicle,
a primary heating circuit (7) including a solar collector (22) and flown through by heating water, and
a third heat exchanger (17) forming a part of the primary heating circuit (7) and the secondary heating circuit (6) for transferring the heat energy of the primary heating circuit (7) onto the secondary heating circuit (6).

2. The system according to claim 1, **characterized in that** it includes furthermore a gas burner (29) for heating the water in the hot-water boiler (1).

3. The system according to claim 1 or 2, **characterized in that** it includes a radiator as room heating means forming a part of the secondary heating circuit (6).

4. The system according to one of the claims 1 to 3, **characterized in that** it includes a fourth heat exchanger for cooling by means of a refrigerating circuit, said fourth heat exchanger forming a part of the secondary heating circuit (6).

5. The system according to one of the preceding claims, **characterized in that** the solar collector (22) is formed as plate-like collector.

6. The system according to claim 5, **characterized in that** the plate-like collector has an array of 10-14, especially 12, tubes arranged parallel with respect to one another, said array being connected to the primary circuit (7).

7. The system according to one of the preceding claims, **characterized in that** the tubes of the solar collector (22) are formed as eyeglass tubes.

8. The system according to one of the preceding claims, **characterized in that** the primary heating circuit (7) includes an antifreezing compound.

## Revendications

1. Installation pour la préparation d'eau chaude dans des véhicules routiers et des véhicules navals tels que des camping-cars, des caravanes, bateaux et similaires comprenant
un chauffe-eau (1) avec un volume intérieur (2) pour recueillir l'eau à chauffer,
**caractérisée par** un volume intérieur, un volume extérieur (5) dans lequel circule de l'eau chaude et qui entoure au moins en partie ce volume intérieur,
un circuit de chauffage secondaire (6) dans lequel circule de l'eau chaude et qui est raccordé au volume extérieur (5) du chauffe-eau (1)
un premier échangeur de chaleur (8) qui constitue une partie du circuit de chauffage secondaire (6) et qui est alimenté avec la chaleur dissipée par un réfrigérateur,
un deuxième échangeur de chaleur (10) qui constitue une partie du circuit de chauffage secondaire (6) et qui est alimenté avec la chaleur dissipée par le moteur d'entraînement du véhicule,
un circuit de chauffage primaire (7) qui présente un capteur solaire (22) et dans lequel circule de l'eau chaude, et
un troisième échangeur de chaleur (17) qui constitue une partie du circuit de chauffage primaire (7) et du circuit de chauffage secondaire (6) et qui est destiné à transmettre l'énergie calorifique du circuit de chauffage primaire (7) au circuit de chauffage secondaire (6).

2. Installation selon la revendication 1, **caractérisée en ce qu'**elle présente en outre un brûleur (29) pour chauffer l'eau se trouvant dans le chauffe-eau (1).

3. Installation selon la revendication 1 ou 2, **caractérisée en ce qu'**elle a comme dispositif de chauffage du volume un radiateur qui constitue une partie du circuit de chauffage secondaire (6).

4. Installation selon une des revendications 1 à 3,
**caractérisée en ce qu'**elle présente un quatrième échangeur de chaleur qui constitue une partie du circuit de chauffage secondaire (6) et qui est destiné au refroidissement à l'aide d'un circuit frigorifique.

5. Installation selon une des revendications précédentes, **caractérisée en ce que** le capteur solaire (22) est configuré comme un capteur en forme de plaque.

6. Installation selon la revendication 5, **caractérisée en ce que** le capteur en forme de plaque présente une rangée de 10 - 14, en particulier de 12 tubes disposés parallèlement entre eux qui est raccordée au circuit primaire (7).

7. Installation selon une des revendications précédentes, **caractérisée en ce que** les tubes du capteur solaire (22) sont configurés comme des tubes en forme de lunettes.

8. Installation selon une des revendications précédentes, **caractérisée en ce que** le circuit de chauffage primaire (7) contient un produit antigel.
